# EUROPEAN PATENT SPECIFICATION

(11) **EP 1 591 981 B1**
(45) Date of publication and mention of the grant of the patent: **13.01.2010**
(21) Application number: 05007107.5
(22) Date of filing: 31.03.2005
(51) Int. Cl.: G08G 1/0967, G08G 1/01

(54) **Traffic information transmitting apparatus and method**
Verfahren und Vorrichtung zur Übertragung von Verkehrsinformationen
Procédé et appareil de transmission des informations de trafic

(30) Priority: 26.04.2004 JP 2004129854
(43) Date of publication of application: 02.11.2005
(73) Proprietor: AISIN AW CO., LTD., Anjo, Aichi 444-1192 (JP)
(72) Inventor: Ishikawa, Hiroki, Okazaki Aichi 444-8564 (JP); Yoshikawa, Kazutaka, Okazaki Aichi 444-8564 (JP)
(74) Representative: TBK-Patent

(56) References cited:
- DE-A1- 19 651 143
- US-A- 5 539 645
- US-B1- 6 255 963

## Description

Related technical fields include a traffic information transmitting apparatus and transmitting method.

A conventional vehicle navigation apparatus, such as described in Japanese Unexamined Patent Application Publication No. 2003-302224, obtains various kinds of traffic information necessary for route search from an exclusive information communication system and uses the stored information for searching for a shortest route.

According to the aforementioned navigation apparatus, when the navigation apparatus has already obtained traffic information data, for example, accumulated, statistical data which is traffic information taken in the past and/or received data in advance, it is no use receiving same data as the obtained traffic information data again from an exclusive information communication system. Because of such redundant data, amount of communication may increase so that extra communication time and communication cost may be needed.

Accordingly, it is beneficial to provide a traffic information transmitting apparatus and a transmitting method for transferring only different traffic information from traffic information which has been obtained by the navigation apparatus in advance.

DE 196 51 193 A1 discloses an traffic information apparatus and related method according to the preambles of claims 1 and 7.

Accordingly, various exemplary implementations of the principles described herein provide a traffic information transmitting apparatus according to claim 1.

In this manner, the vehicle receives traffic information only when the information differs from the information which has been taken in the past, and stores the received traffic information. Thus effective data transfer may be executed without transferring unnecessary data which the vehicle already has obtained. In addition, amount of transferring/receiving data may be reduced, so that it is possible to improve response and reduce communication cost.

Various exemplary implementations of the principles described herein provide a traffic information transmitting apparatus according to dependent claims 2 and 3. In this manner, the vehicle receives traffic information only when the information differs from information which has been taken in the past more than a predetermined percentage for an area. Thus effective data transfer may be executed without transferring unnecessary data which the vehicle already has obtained. In addition, amount of transferring/receiving data may be reduced, so that it is possible to improve response and reduce communication cost.

Various exemplary implementations of the principles described herein provide a traffic information transmitting apparatus according to dependent claims 4 and 5.

In this manner, the passing time on the tentative route may be calculated based upon the current traffic information and the accumulated traffic information. Thus the passing times on the predetermined road may also be estimated based on the calculated passing times on the tentative route. If the estimated traffic information differs from the accumulated traffic information relevant to the estimated passing times, such estimated traffic information may be transferred to the vehicle as peculiar information.

Various exemplary implementations of the principles described herein provide a traffic information transmitting apparatus according to dependent claims 6.

Furthermore, a method for transmitting traffic information according to claim 7 is provided.

In this manner, the vehicle receives traffic information only when the information differs from the information which has been taken in the past and stores the received traffic information. Thus effective data transfer may be executed without transferring unnecessary data which the vehicle already has obtained. In addition, amount of transferring/receiving data may be reduced, so that it is possible to improve response and reduce communication cost.

Note that the reference numerals within the parentheses of the above respective means show the corresponding relation with concrete means described in embodiments described later.

Exemplary implementations will now be described with reference to the accompanying drawings, wherein:

Fig. 1 is a block diagram showing a traffic information transmitting apparatus according to an exemplary implementation of the principles described herein;

Fig. 2 is a flowchart showing a navigation program executed by a controller in Fig. 1 according to an exemplary implementation of the principles described herein;

Fig. 3 is a flowchart showing a server program executed by a server in an exclusive communication system in Fig. 1 according to an exemplary implementation of the principles described herein; and

Fig. 4 is a detailed flowchart showing a routine of a peculiar area detection processing in Fig. 3.

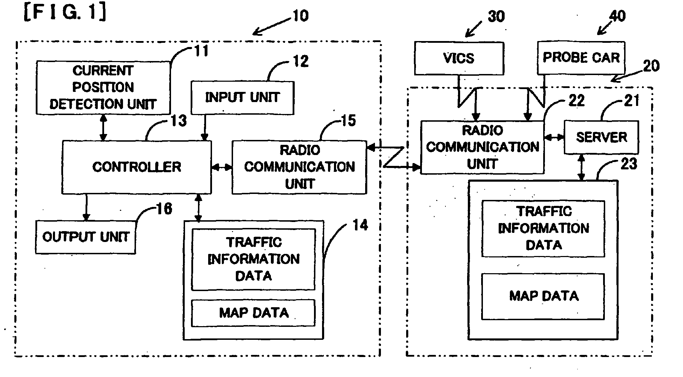

Fig. 1 is a diagram showing an exemplary vehicle navigation apparatus. The navigation apparatus 10 is provided with a current position detection unit 11, and a GPS receiver that receives radio waves sent from an artificial satellite of a satellite navigation system (also known as GPS) and detects a current position of the vehicle as well as a present day and time is employed as the current position detection unit 11.

In addition, the navigation apparatus 10 is provided with an input unit 12 and the input unit 12 is a portable remote controller, the operation of which send required information through transmission to a receiving section (not shown) of a controller 13 (described later). Note that instead of using the above remote controller as the input unit 12, a touch panel provided along a display screen in a liquid crystal display panel of an output unit 16 (described later) may be employed as the input unit 12.

Furthermore, the navigation apparatus 10 is provided with the controller 13, a memory 14, a radio communication unit 15, and the output unit 16. The controller 13 is connected with, for example, a CPU, a RAM, and a ROM other than the receiving sections described above via bus lines.

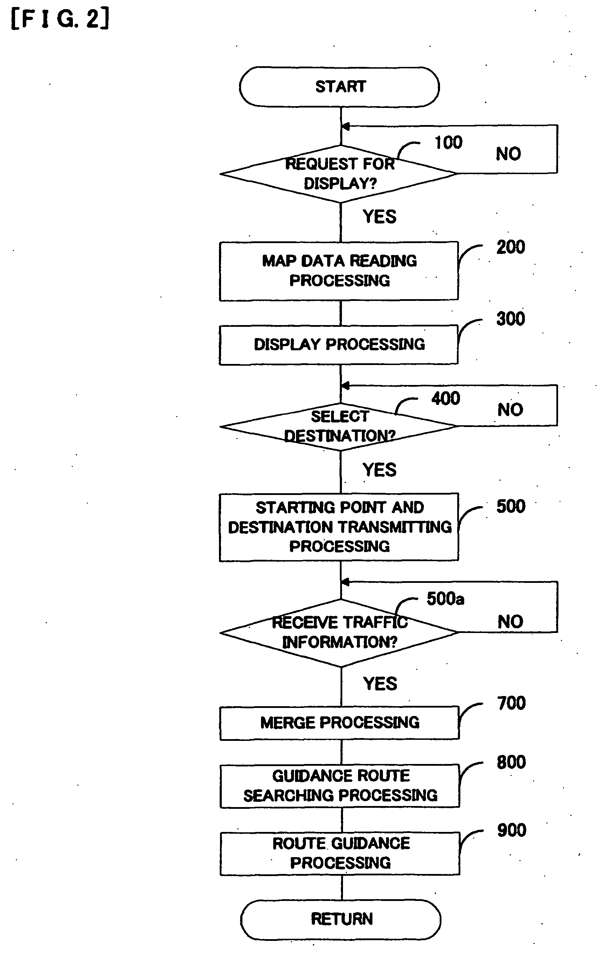

The controller 13 may execute a navigation program according to the flowchart in Fig. 2. During execution of the program, the controller 30 may execute various processing required for route guidance of the vehicle and map display processing based upon detection output of the current position detection unit 11, operation output of the input unit 12, output of the memory 14, output of the radio communication unit 15 and output of an exclusive information communication system 20 (described later).

The memory 14 consists of a hard disk, and traffic information data and map data are stored in the memory 14 as a database that is readable by the controller 13. The radio communication unit 15 receives road traffic information from the exclusive information communication system 20 and outputs the data to the controller 13.

The exclusive information communication system 20 installed in an exclusive information center may execute wireless communication with the radio communication unit 15, a road traffic information communication system installed in a road traffic information communication center (hereinafter also referred to as VICS (registered trademark) 30), and a probe car 40.

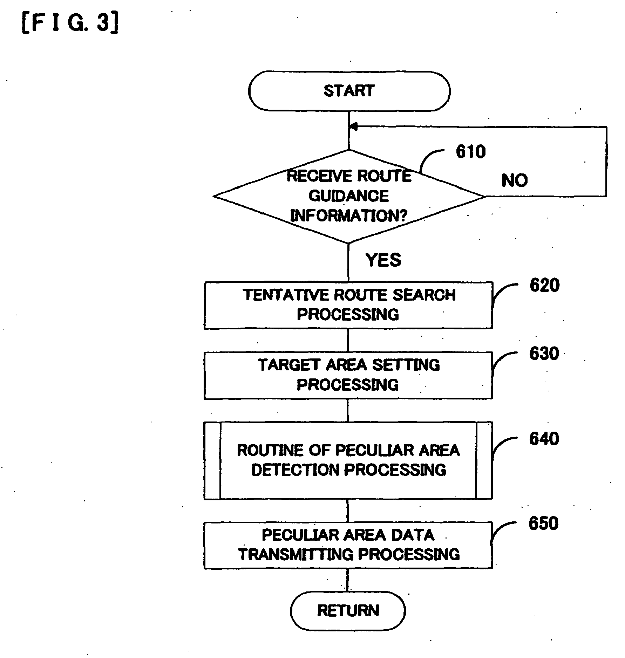

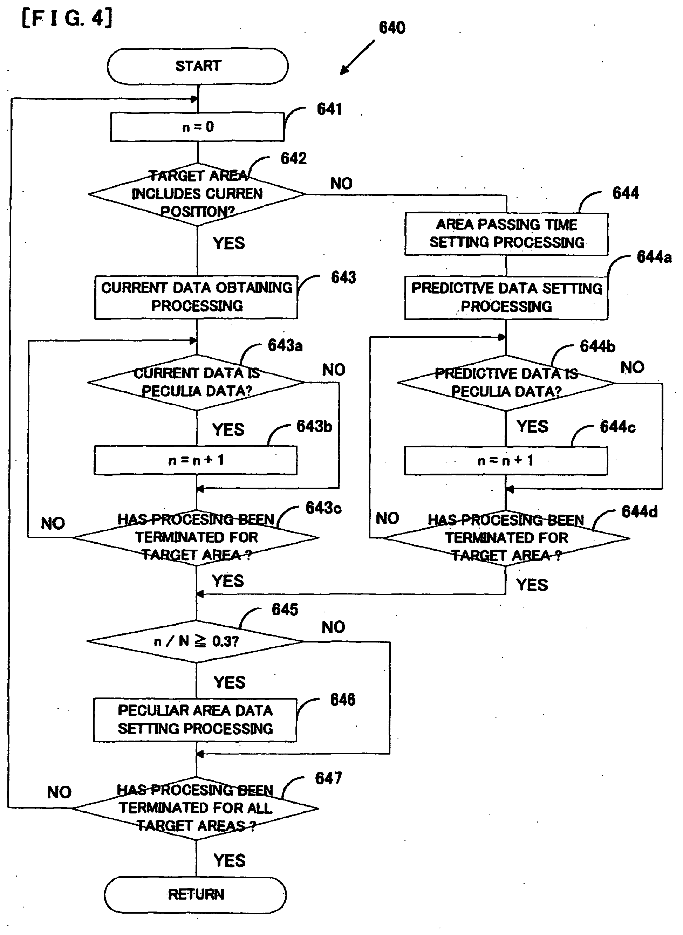

The exclusive information communication system 20 may be provided with a server 21, a radio communication unit 22, and a memory 23. The server 21 may execute a server program according to flowcharts in Fig. 3 and 4. During execution of the server program, the server 21 may communicate with the radio communication unit 15 and VICS 30 via the radio communication unit 22. Note that the server program is written in advance on a ROM of the server 21 and readable by the server 21.

The memory 23 consists of a hard disk. The memory 23 may store traffic information data and map data including same data as the traffic information data in the memory 14 (hereinafter referred to as accumulated data) as a database and such data is readable by the server 21.

The output unit 16 consists of a display device. Based upon control by the controller 13, the output unit 16 may display information required for the vehicle. Note that the output unit 16 is installed in an instrument panel on an interior wall of the vehicle and displays on a display panel such as a liquid crystal panel.

In the present embodiment structured as above, while the navigation apparatus 10 is in active, the controller 13 initiates execution of the program according to the flowchart in Fig. 2. At this stage, if a request for display has not been made by the input unit 20, "NO" is repeatedly selected in step 100 in Fig. 2.

In this manner, if the input unit 12 requests for displaying a desired map, "YES" is selected in step 100. Then a map corresponding to the request (hereinafter referred to as "desired map data") is read out from the memory 14 in step 200. More specifically, the desired map data is read out from a database of the memory 14. Then in step 300, the output unit 16 displays the requested map data on the display panel.

After the processing in step 300 is terminated, it is determined whether a destination needs to be selected in step 400. At this time, if the destination has not been input in the controller 13 by operation of the input unit 12, "NO" is repeatedly selected in step 400. If the destination has already been input in the controller 13 by operation of the input unit 12, "YES" is selected in step 400. Then in step 500, the current position which is detected by the current position detection unit 11 and the destination which is input by the input unit 12 are transferred, that is, data relevant to the detected current position and the input destination is transferred from the controller 13 to the exclusive information communication system 20 via the radio communication unit 15.

Meanwhile, "NO" is repeatedly selected in step 610 of Fig. 3 by this moment because of detection by the server 21 of the exclusive information communication system 20. Once the server 21 receives data relevant to the detected current position and the input destination from the radio communication unit 15 via the radio communication unit 22, "YES" is finally selected in step 610.

Next, in step 620, a tentative route search processing is executed. During the processing, a route from the current position obtained in step 610 to the input destination is searched as a tentative route based on the accumulated data in the memory 23.

Subsequently, in step 630, a target area setting processing is executed. During the processing, an area including the tentative route searched in step 620 is set as a target area. In this example, "area" is a part of map data stored in the memory 23, for example, a region of a square 10 (km) on a side on map data.

Next, a routine of a peculiar area detection processing 640 is executed as follows. First, the number of peculiar data "n" is set as "n" = 0 in step 641, and it is determined whether the target area includes the current position. If the target area includes the current position, "YES" is selected in step 642.

Subsequently in step 643, a current data obtaining processing is executed. During the processing, regarding the present time, link travel times for all links within the target area are obtained from VICS 30 and the probe car 40 via the radio communication unit 22 as current data.

Then, it is determined whether the current data is peculiar data in step 643a. When link travel times in the current data obtained in step 643 are different from link travel times in the accumulated data in the memory 23 equal to or greater than 10 % of the accumulated data, the current data is determined as peculiar data. If the current data is not peculiar data in step 643a, "NO" is selected and the method proceeds to step 643c.

On the other hand, if the current data is determined as peculiar data in step 643a, "YES" is selected and the number of peculiar data "n" is updated to "n = n + 1" in step 643b. Then, it is determined whether similar processing is executed for all links within the target area in step 643c.

If the determinations about whether current data is peculiar data have not been completed for all links within the target area yet, "NO" is selected in step 643c and the processing in step 643a is executed again. Then the processing in step 643a is repeated until "YES" is selected in step 643c.

Further if the target area does not include the current position in step 642, "NO" is selected, and an area passing time setting processing is executed in step 644. During the processing, a time when the vehicle enters within the target area along the tentative route searched in step 620 is set as an area passing time.

Subsequently in step 644a, a predictive data setting processing is executed. During the processing, link travel times corresponding to the area passing times set in step 644 are set as predictive data corresponding to the area passing times for each link within the target area.

The predictive data is calculated based upon two types of link travel times; one of which is obtained from VICS 30 and the probe car 40 via the radio communication unit 22 relevant to the present time and the other of which corresponds to the area passing time accumulated in the memory 23.

Then, it is determined whether the predictive data is peculiar data in step 644b. When link travel times in the predictive data set in step 644a are different from link travel times in the accumulated data in the memory 23 equal to or greater than 10 % of the accumulated data, the predictive data is determined as peculiar data.

If the predictive data is not peculiar data in step 644b, "NO" is selected and the method proceeds to step 644d.

If the predictive data is determined as peculiar data in step 644b, "YES" is selected and the number of peculiar data "n" is updated to "n = n + 1" in step 644c. Then in step 644d, it is determined whether similar processing is executed for all links within the target area.

If the determinations about whether predictive data is peculiar data have not been completed for all links within the target area yet, "NO" is selected in step 644d and the processing in step 644b is executed again. Then the processing in step 644b is repeated until "YES" is selected in step 644d.

If "YES" is selected in any one of step 643c or 644d; that is, if any one of the current data or the predictive data for all links within the target area is determined as peculiar data, it is further determined whether "n/N" is equal to or greater than 0.3 in step 645. "N" denotes the total number of data for all links within the target area.

If the number of peculiar data is less than 30% of the total number of data within the target area (that is, n/N is less than 0.3), the target area is not peculiar area so that "NO" is selected in step 645. Then the method proceeds to step 647.

If the number of peculiar data "n" is equal to or greater than 30% of the total number of data "N" within the target area, the target area is determined as peculiar area so that "YES" is selected in step 645.

Subsequently in step 646, a peculiar area setting processing is executed. During the processing, the current data obtained in step 643 or the predictive data set in step 644a is set as peculiar area data according to all links within the target area.

Then it is determined whether the processing has been executed for all target areas in step 647. If the determinations about whether current data or predictive data is peculiar data have not been completed for all target areas yet, "NO" is selected in step 647 and the processing in step 641 is executed again. Then the processing in step 641 is repeated until "YES" is selected in step 647.

If the determinations about whether current data or predictive data is peculiar data have been completed for all target areas and "YES" is selected in step 647, a peculiar area data transmitting processing is executed in step 650. During the processing, the server 21 sends the peculiar area data set in step 646 to the controller 13 via the radio communication unit 22 and 15.

Only peculiar data which is not stored in a database of the memory 13 may be transferred to the navigation apparatus 10, thus effective data transfer may be executed without transferring unnecessary data which the memory 13 already has obtained. In addition, amount of transferring/receiving data may be reduced, so that it is possible to improve response and reduce communication cost.

After the processing by the exclusive information communication system 20 as described above, the radio communication unit 15 receives the peculiar area data from the exclusive information communication system 20 and outputs it to the controller 13 so that "YES" is selected in step 500a.

After that, the peculiar area data is merged in step 700. The peculiar area data received by the controller 13 via the radio communication unit 15 is stored in a database of the memory 14 and then a guidance route is searched in consideration of link travel times accumulated in the database of the memory 14 in step 700. Further, guidance along the searched route is started in consideration of traffic congestion prediction in step 800.

Note that the present invention is not limited to the details of the embodiments described above, but various modifications are possible without departing from the spirit and the scope of the present invention.
1) A vehicle being subject to the present invention is not limited to a private car, but for example, a van, microbus, and a train may be used.
2) In above-mentioned step 644, a time when a vehicle driving on a searched tentative route enters into a target area is set as an area passing time based on accumulated data in step 620. However, link travel times may be estimated based on current data and accumulated data for each link on a tentative route in step 620, and it is possible to set area passing times by calculating area entering times based on link travel times on the tentative route.

To be specific, passing times at previous/following nodes of a link which reaches the target area may be estimated from the above-mentioned link travel times, each distance may be calculated between the entering point and the previous/following nodes, and then an entering time to the target area may be estimated based on the calculated distance ratio.
3) In above-mentioned step 643a, current data is determined as peculiar data when link travel times in the current data are different from link travel times in accumulated data equal to or greater than 10 % of the accumulated data. However, it is not the only way to determine current data as peculiar data, but current data may be determined as peculiar data even when link travel times in the current data are within an amount of the average ± standard deviation of link travel times in the accumulated data.
4) In above-mentioned step 643a, current data is determined as peculiar data when link travel times in the current data are different from link travel times in accumulated data equal to or greater than 10 % of the accumulated data. However, it is not the only way to determine current data as peculiar data, but current data may be determined as peculiar data even when traffic congestion degrees in the current data are different from that in the accumulated data. Note that traffic congestion degrees are rated on a scale of four (4) levels, for example, in order of traffic congestion degree, "Congested", "Crowded", "Not congested", and "Uncertain". If there is a link which is not allocated traffic congestion degree, a vehicle speed may be calculated based on the link travel time and the link length, and the traffic congestion degree for the link may be determined based on the calculated vehicle speed.
5) In above-mentioned step 644b, predictive data is determined as peculiar data when link travel times in the predictive data are different from link travel times in accumulated data equal to or greater than 10 % of the accumulated data. However, it is not the only way to determine predictive data as peculiar data, but predictive data may be determined as peculiar data even when link travel times in the predictive data are within an amount of the average ± standard deviation of link travel times in the accumulated data.
6) In above-mentioned step 644b, predictive data is determined as peculiar data when link travel times in the predictive data are different from link travel times in the accumulated data equal to or greater than 10 % of the accumulated data. However, it is not the only way to determine predictive data as peculiar data, but predictive data may be determined as peculiar data even when traffic congestion degrees in the predictive data are different from that in the accumulated data.

While various features have been described in conjunction with the exemplary embodiments outlined above, various alternatives, modifications, variations, and/or improvements of those features may be possible. Accordingly, the exemplary implementations of the invention, as set forth above, are intended to be illustrative. Various changes may be made without departing from the spirit and scope of the invention.

As described above, a traffic information transmitting apparatus and a transmitting method transmit only different traffic information from the traffic information which has been obtained by a navigation apparatus in advance. A tentative route is searched from a detected current position of a vehicle to an input destination. According to each link in each target area including the tentative route, current data or predictive data is compared with accumulated data corresponding to the link passing time in the memory 23, and if the calculated ratio between the current data or predictive data and the accumulated data is equal to or more than a predetermined amount, the link is set as peculiar data. Then when such peculiar data accounts for 30% or greater than 30% of the all data in the target area, current data or predictive data for all links in the target area is transferred to the navigation apparatus.

## Claims

1. A traffic information transmitting apparatus, comprising:
a storage means (23) for storing accumulated traffic information including vehicle traffic information used in the past;
**characterized by**
an estimating means (630) for estimating traffic information at a passing time when a vehicle enters a predetermined road based on the accumulated traffic information;
a difference detection means (644, 647) for determining whether a congestion degree of the estimated traffic information differs from the congestion degree of the traffic information stored in the vehicle; and
a transmitting means (22) for transmitting, when the difference detection means detects the difference in the congestion degree between the estimated traffic information and the traffic information stored in the vehicle, the estimated traffic information to the vehicle as peculiar information.

2. The traffic information transmitting apparatus of claim 1, further comprising a receiving means for receiving current traffic information, wherein
the estimating means (630) is adapted to estimate traffic information at the passing time in accordance not only with the accumulated traffic information but with the current traffic information.

3. The traffic information transmitting apparatus of Claim 1 or Claim 2, further comprising:
the storage means (23) for storing map data; an abstracting means (642) for abstracting a plurality of areas from the map data as target areas; and
a peculiar area detection means (647) for detecting, provided that the difference detection means determines that the estimated traffic information is different from the accumulated traffic information equal to or greater than a predetermined percentage of the target areas, the target area as peculiar area, wherein:
when peculiar area is detected by the peculiar area detection means, the transmitting means transfers the estimated traffic information within the peculiar area to the vehicle.

4. The traffic information transmitting apparatus of Claim 3, further comprising:
a receiving means (22) for receiving a current position and a destination of the vehicle; and
a tentative route searching means (630) for searching for a tentative route from the current position to the destination on the predetermined road, wherein that the abstracting means abstracts a plurality of areas including the tentative route as target areas.

5. The traffic information transmitting apparatus of Claim 4, further comprising:
a passing time calculating means (644) for calculating passing times on the tentative route based upon the current traffic information and the accumulated traffic information, wherein the estimating means sets the passing times on the tentative route as passing times on the predetermined road.

6. The traffic information transmitting apparatus according to Claim 4, wherein passing times on each road within the target area among the predetermined roads are specified with entering times to a part of the tentative route within the target area.

7. A method for transmitting traffic information, comprising the steps of:
storing accumulated traffic information including vehicle traffic information used in the past;
**characterized by**
estimating traffic information at a time when a vehicle enters a predetermined road based on the accumulated traffic information;
determining whether a congestion degree of the estimated traffic information differs from the congestion degree of the traffic information stored in the vehicle; and
transmitting, when the difference detection means detects the difference in the congestion degree between the estimated traffic information and the traffic information stored in the vehicle, the estimated traffic information to the vehicle as peculiar information.

## Patentansprüche

1. Verkehrsinformationssendevorrichtung mit:
einer Speichereinrichtung (23) zum Speichern von akkumulierten Verkehrsinformationen einschließlich von in der Vergangenheit verwendeten Fahrzeugverkehrsinformationen;
**gekennzeichnet durch**
eine Schätzeinrichtung (630) zum Schätzen von Verkehrsinformationen zu einem Passierzeitpunkt, zu dem ein Fahrzeug auf eine vorbestimmte Straße einfährt, auf der Grundlage der akkumulierten Verkehrsinformationen;
eine Differenzerfassungseinrichtung (644, 647) zum Bestimmen, ob ein Verstopfungsgrad der geschätzten Verkehrsinformationen von dem Verstopfungsgrad der in dem Fahrzeug gespeicherten Verkehrsinformationen abweicht; und
eine Sendeeinrichtung (22) zum Senden, wenn die Differenzerfassungseinrichtung die Differenz in dem Verstopfungsgrad zwischen den geschätzten Verkehrsinformationen and den in dem Fahrzeug gespeicherten Verkehrsinformationen erfasst, der geschätzten Verkehrsinformationen zu dem Fahrzeug als Sonderinformationen.

2. Verkehrsinformationssendevorrichtung gemäß Anspruch 1, mit einer Empfangseinrichtung zum Empfangen von momentanen Verkehrsinformationen, wobei
die Schätzeinrichtung (630) eingerichtet ist, um Verkehrsinformationen zu dem Passierzeitpunkt nicht lediglich gemäß den akkumulierten Verkehrsinformationen, sondern auch gemäß den momentanen Verkehrsinformationen zu schätzen.

3. Verkehrsinformationssendevorrichtung gemäß Anspruch 1 oder 2, mit:
einer Speichereinrichtung (23) zum Speichern von Kartendaten;
einer Abstraktionseinrichtung (642) zum Abstrahieren einer Vielzahl von Gebieten aus den Kartendaten als Zielgebiete; und
einer Sondergebietserfassungseinrichtung (647) zum Erfassen des Zielgebiets als Sondergebiet unter der Voraussetzung, dass die Differenzerfassungseinrichtung bestimmt, dass sich die geschätzten Verkehrsinformationen von den akkumulierten Verkehrsinformationen um oder um mehr als einen vorbestimmten Prozentsatz der Zielgebiete unterscheiden, wobei:
wenn ein Sondergebiet durch die Sondergebietserfassungseinrichtung erfasst wird, dann die Sendeeinrichtung die geschätzten Verkehrsinformationen innerhalb des Sondergebiets zu dem Fahrzeug übermittelt.

4. Verkehrsinformationssendevorrichtung gemäß Anspruch 3, mit:
einer Empfangseinrichtung (22) zum Empfangen einer momentanen Position und eines Zielorts des Fahrzeugs; und
einer Proberoutensucheinrichtung (630) zum Suchen nach einer Proberoute von der momentanen Position zu dem Zielort auf der vorbestimmten Straße, wobei dass die Abstraktionseinrichtung eine Vielzahl von Gebieten einschließlich der Proberoute als Zielgebiete abstrahiert.

5. Verkehrsinformationssendevorrichtung gemäß Anspruch 4, mit:
einer Passierzeitpunktberechnungseinrichtung (644) zum Berechnen von Passierzeitpunkten auf der Proberoute auf der Grundlage der momentanen Verkehrsinformationen und der akkumulierten Verkehrsinformationen, wobei die Schätzeinrichtung die Passierzeitpunkte auf der Proberoute als Passierzeitpunkte auf der vorbestimmten Straße setzt.

6. Verkehrsinformationssendevorrichtung gemäß Anspruch 4, wobei Passierzeitpunkte auf jeder Straße innerhalb des Zielgebiets unter den vorbestimmten Straßen mit Einfahrtszeitpunkten auf einen Teil der Proberoute innerhalb des Zielgebiets spezifiziert werden.

7. Verfahren zum Senden von Verkehrsinformationen, mit den Schritten:
Speichern von akkumulierten Verkehrsinformationen einschließlich von in der Vergangenheit verwendeten Fahrzeugverkehrsinformationen;
**gekennzeichnet durch**
Schätzen von Verkehrsinformationen zu einem Zeitpunkt, zu dem ein Fahrzeug auf eine vorbestimmte Straße einfährt, auf der Grundlage der akkumulierten Verkehrsinformationen;
Bestimmen, ob ein Verstopfungsgrad der geschätzten Verkehrsinformationen von dem Verstopfungsgrad der in dem Fahrzeug gespeicherten Verkehrsinformationen abweicht; und
Senden, wenn die Differenzerfassungseinrichtung die Differenz in dem Verstopfungsgrad zwischen den geschätzten Verkehrsinformationen and den in dem Fahrzeug gespeicherten Verkehrsinformationen erfasst, der geschätzten Verkehrsinformationen zum dem Fahrzeug als Sonderinformationen.

## Revendications

1. Appareil de transmission d'informations concernant le trafic routier,
comprenant:
un moyen de stockage (23) pour stocker des informations accumulées concernant le trafic routier comportant des informations concernant le trafic routier des véhicules utilisées dans le passé;
**caractérisé par**
un moyen d'estimation (630) pour estimer des informations concernant le trafic routier à un temps passé lorsqu'un véhicule entre dans une route prédéterminée sur la base des informations accumulées concernant le trafic routier;
un moyen (644, 647) de détection de différence pour déterminer si un degré d'encombrement des informations estimées concernant le trafic routier est différent du degré d'encombrement des informations concernant le trafic routier stockées dans le véhicule; et
un moyen de transmission (22) pour transmettre, lorsque le moyen de détection de différence détecte la différence du degré d'encombrement entre les informations estimées concernant le trafic routier et les informations concernant le trafic routier stockées dans le véhicule, les informations estimées concernant le trafic routier au véhicule en tant qu'informations particulières.

2. Appareil de transmission d'informations concernant le trafic routier de la revendication 1, comprenant en plus un moyen de réception pour recevoir des informations actuelles concernant le trafic routier, où
le moyen d'estimation (630) est adapté pour estimer des informations concernant le trafic routier au temps de passage non seulement en accord avec les informations accumulées concernant le trafic routier mais avec les informations actuelles concernant le trafic routier.

3. Appareil de transmission d'informations concernant le trafic routier de la revendication 1 ou la revendication 2, comprenant en plus:
le moyen de stockage (23) pour stocker des données cartographiques;
un moyen d'extraction (642) pour extraire une pluralité de zones des données cartographiques comme zones cibles; et
un moyen (647) de détection de zone particulière pour détecter, à condition que le moyen de détection de différence détermine que les informations estimées concernant le trafic routier sont différentes des informations accumulées concernant le trafic routier supérieur ou égal à un pourcentage prédéterminé des zones cibles, la zone cible comme zone particulière, où:
lorsqu'une zone particulière est détectée par le moyen de détection de zone particulière, le moyen de transmission transfère les informations estimées concernant le trafic routier à l'intérieur de la zone particulière au véhicule.

4. Appareil de transmission d'informations concernant le trafic routier de la revendication 3, comprenant en plus:
un moyen de réception (22) pour recevoir une position actuelle et une destination du véhicule; et
un moyen (630) de recherche de route provisoire pour rechercher une route provisoire à partir de la position actuelle vers la destination sur la route prédéterminée, où le moyen d'extraction extrait une pluralité de zones comportant la route provisoire en tant que zones cibles.

5. Appareil de transmission d'informations concernant le trafic routier de la revendication 4, comprenant en plus:
un moyen (644) de calcul du temps de passage pour calculer des temps de passage sur la route provisoire sur la base des informations actuelles concernant le trafic routier et les informations accumulées concernant le trafic routier, où le moyen d'estimation établit les temps de passage sur la route provisoire en tant que temps de passage sur la route prédéterminée.

6. Appareil de transmission d'informations concernant le trafic routier selon la revendication 4, dans lequel des temps de passage sur chaque route dans la zone cible parmi les routes prédéterminées sont spécifiés avec des temps d'entrée sur une partie de la route provisoire dans la zone cible.

7. Procédé pour transmettre des informations concernant le trafic routier, comprenant les étapes consistant à:
stocker des informations accumulées concernant le trafic routier comportant des informations concernant le trafic routier de véhicules utilisées par le passé;
**caractérisé par** le fait de
estimer des informations concernant le trafic routier à un moment où un véhicule entre dans une route prédéterminée sur la base des informations accumulées concernant le trafic routier;
déterminer si un degré d'encombrement des informations estimées concernant le trafic routier diffère du degré d'encombrement des informations concernant le trafic routier stockées dans le véhicule; et
lorsque le moyen de détection de différence détecte la différence du degré d'encombrement entre les informations estimées concernant le trafic routier et les informations concernant le trafic routier stockées dans le véhicule, transmettre les informations estimées concernant le trafic routier au véhicule en tant qu'informations particulières.
